# EUROPEAN PATENT APPLICATION

(11) **EP 0 821 181 A2**
(43) Date of publication of application: **28.01.1998**
(21) Application number: 97111972.2
(22) Date of filing: 14.07.1997
(51) Int. Cl.: F16F 13/26

(54) **Fluid-filled elestic mount having low-and medium-frequency vibration damping orifices, and high-frequency vibration isolating movable member**

(30) Priority: 26.07.1996 JP 197493/96
(71) Applicant: TOKAI RUBBER INDUSTRIES, LTD., Komaki-shi Aichi-ken (JP)
(72) Inventor: Kato, Rentaro, Oaza-Kitatoyama, Komaki-shi, Aichi-ken (JP)
(74) Representative: Pellmann, Hans-Bernd, Dipl.-Ing.

(57) **Abstract**

A fluid-filled elastic mount having elastic body (16) partially defining a pressure-receiving chamber (48), a flexible layer (44) partially defining an equilibrium chamber (50) communicating with the pressure-receiving chamber through first and second orifices (60, 66), a presser member (74) normally biased to force the flexible layer to close the second orifice at its one end on the side of the equilibrium chamber and partially defining an operating chamber (88) which is exposed to a reduced pressure to permit the flexible layer to be moved for enabling the second orifice to normally function, and a movable member (100) partially defining an auxiliary chamber (112) which is exposed to the reduced pressure to disable the movable member to normally function.

## Description

This application is based on Japanese Patent Application No. 8-197493 filed July 26, 1996, the content of which is incorporated hereinto by reference.

### BACKGROUND OF THE INVENTION

### Field of the Invention

The present invention relates to a fluid-filled elastic mount adapted to damp or isolate vibrations by utilizing flows of a fluid contained therein, and more particularly to such a fluid-filled elastic mount having a first and a second orifice passage for providing damping effects with respect to low- and medium-frequency vibrations, and a movable member for providing a damping effect with respect to high-frequency vibrations.

### Discussion of the Related Art

As a mounting device, there is known a fluid-filled elastic mount including (a) a first mounting member and a second mounting member which are to be fixed to respective two members to be connected to each other in a vibration damping manner, (b) an elastic body made of a rubber material, connecting the first and second mounting members, and having a portion partially defines a pressure-receiving chamber which is adapted to receive a vibrational load and which is filled with a non-compressible fluid such as water, (c) a flexible diaphragm partially defining an equilibrium chamber whose volume is variable and which is filled with the fluid, and (d) means for defining an orifice passage for fluid communication between the pressure-receiving and equilibrium chambers, so that the fluid-filled elastic mount exhibits a damping effect on the basis of effects provided by flows of the fluid through the orifice passage, for instance, on the basis of an effect produced by resonance of the fluid flowing through the passage.

JP-A-59-117929 discloses a fluid-filled elastic mount adapted to exhibit damping effects with respect to vibrations over a relatively wide range of frequency thereof, or different frequency bands of the vibrations. This fluid-filled elastic mount includes (i) means for defining a first orifice passage turned to exhibit a damping effect with respect to low-frequency vibrations, (ii) means for defining a second orifice passage turned to exhibit a damping effect with respect to medium-frequency vibrations, (iii) cut-off means for disconnecting the second orifice passage, for selectively enabling the first and second orifice passages to function, and (iv) a movable member which is disposed so as to partially define the pressure-receiving chamber and which is deformable or displaceable to absorb a change in the pressure within the pressure-receiving chamber, for thereby improving a damping effect with respect to high-frequency vibrations.

For example, such fluid-filled elastic mounts may be suitably employed as an engine mount for mounting an engine unit of an automotive vehicle on its body. In this case, the second orifice passage provides a damping or isolating effect with respect to the medium-frequency vibrations such as an engine idling vibration generated during idling of the engine while the vehicle is stopped, and the first orifice passage provides a damping effect with respect to the low-frequency vibrations such as shakes during running of the vehicle, while the movable member provides a vibration isolating effect with respect to the high-frequency vibrations such as booming noise.

However, the provision of the movable member to improve the isolating effect with respect to the high-frequency vibrations has a risk of reducing the damping effects provided by the first and second orifice passages, since the movable member are more or less formed or displaced so as to absorb the pressure change in the pressure-receiving chamber even when the input vibration has a relatively low or medium frequency. The absorption of the pressure change by the movable member causes a decrease in the amount of flows of the fluid through the orifice passages. In particular, the movable member may cause considerable reduction in the damping effect exhibited by the second orifice passage with respect to the medium-frequency vibrations having a comparatively small amplitude.

In the light of the above drawback, JP-A-4-277341 proposes a fluid-filled elastic mount provided with a rotary valve disposed in the pressure-receiving chamber to selectively enable the second orifice passage and the movable member to function. However, this elastic mount inevitably has a considerably complicated construction.

JP-A-4-277341 also proposes a fluid-filled elastic mount having mutually independent first and second equilibrium chambers which communicate with the first and second orifice passages, respectively, and wherein a flexible diaphragm partially defining the second equilibrium chamber on one side thereof also partially defines a first air chamber on the other side thereof, while a second air chamber is partially defined by the movable member. In this fluid-filled elastic mount, the flexible diaphragm and the movable member are selectively disabled by selectively exposing the first and second air chambers to a reduced pressure, so that the second orifice passage and the movable member are selectively enabled to normally function. However, this elastic mount having the two mutually independent equilibrium chambers communicating with the respective first and second orifice passages further requires a first switching valve for connecting the first air chamber to a vacuum source and a second switching valve for connecting the second air chamber to the vacuum source, and means for controlling these first and second switching valves. Therefore, the present elastic mount suffers from complicated construction and control due to the use of a relatively large number of components and the need of controlling the two switching valves.

### SUMMARY OF THE INVENTION

It is accordingly a first object of the present invention to provide an improved fluid-filled elastic mount which is simple in construction and which is capable of providing excellent damping effects with respect to low-frequency, medium-frequency and high-frequency vibrations through a first orifice passage, a second orifice passage and a movable member, respectively.

A second object of this invention is to provide such an improved fluid-filled elastic mount wherein the absorption of a pressure change in the pressure-receiving chamber by the movable member will not cause appreciable reduction in the damping effect exhibited by the second orifice passage with respect to the medium-frequency vibrations.

The above objects may be achieved according to the principle of the present invention, which provides a fluid-filled elastic mount comprising: (a) a first and a second mounting member; (b) an elastic body elastically connecting the first and second mounting members, and partially defining a pressure-receiving chamber filled with a non-compressible fluid; (c) a first flexible layer whose volume is variable and which partially defines an equilibrium chamber filled with the fluid; (d) passage defining means for defining a first and a second orifice passage for fluid communication between the pressure-receiving and equilibrium chambers, the second orifice passage being tuned to provide a damping effect with respect to a vibrational load whose frequency band is higher than that of the second orifice passage; (e) closing means for closing the second orifice passage, the closing means including the first flexible layer, a presser member disposed on one of opposite sides of the first flexible layer remote from the equilibrium chamber, and biasing means for biasing the presser member to force the first flexible layer onto the passage defining means, for thereby closing the second orifice passage at one end thereof on the side of the equilibrium chamber, the presser member partially defining a first operating chamber on one of opposite sides thereof remote from the first flexible layer, the first operating chamber being exposed to a reduced pressure to move the presser member against a biasing force of the biasing means, for permitting the first flexible layer to be spaced apart from the passage defining means, for enabling the second orifice passage to normally function; and (f) a movable member which partially defines the pressure-receiving chamber and which is deformable or displaceable so as to absorb a change in a pressure in the pressure-receiving chamber, the movable member partially defining a fluid-tightly enclosed auxiliary chamber on one of opposite sides thereof remote from the pressure-receiving chamber, the auxiliary chamber permitting the movable member to be deformed or displaced, the auxiliary chamber being exposed to the reduced pressure to disable the movable member to normally function.

In the fluid-filled elastic mount of the present invention constructed as described above, the second orifice passage is closed by the closing means at its end on the equilibrium chamber, namely, disabled to normally function, when the first operating chamber is not exposed to the reduced pressure, and is enabled to normally function when the first operating chamber is exposed to the reduced pressure. On the other hand, the movable member is enabled to normally function when the auxiliary chamber is not exposed to the reduced pressure, and is disabled to normally function when the auxiliary chamber is exposed to the reduced pressure. When the first operating chamber and the auxiliary chamber are both concurrently exposed to the reduced pressure, the second orifice passage is enabled to normally function and provides an excellent damping effect with respect to medium-frequency vibrations, while the movable member is disabled to normally function, whereby the damping effect provided by the second orifice passage is not influenced by the operation of the movable member to absorb the pressure change in the pressure-receiving chamber. When the reduced pressure is not applied to none of the first operating chamber and the auxiliary chamber, the second orifice passage is closed by the closing means, and the first orifice passage provides a damping effect with respect to low-frequency vibrations, while at the same time the movable member is enabled to normally function to absorb the pressure change in the pressure-receiving chamber and provides an excellent effect of isolating high-frequency vibrations.

Thus, the damping effect provided by the second orifice passage is not reduced at all or less likely to be reduced by the absorption of the pressure change in the pressure-receiving chamber by the movable member. Accordingly, the first and second orifice passages and the movable member cooperate to provide an excellent damping or isolating effect for a wider range of frequency of the input vibrations.

Further, the present fluid-filled elastic mount does not require a switching valve to be incorporated within the pressure-receiving chamber or the equilibrium chamber, for changing the vibration damping characteristics. Accordingly, the present mount is simple in construction and easy to manufacture.

The present fluid-filled elastic mount is arranged such that the first operating chamber and the auxiliary chambers are concurrently connected to a suitable vacuum source for application of the reduced pressure thereto, or both disconnected from the vacuum source, to selectively enable and disable the second orifice passage and the movable member as described above. This arrangement makes it possible to simplify the pneumatic system for selective application of the reduced pressure to the first operating chamber and the auxiliary chamber, and facilitates the control of the pneumatic system.

According to a first preferred form of this invention, the fluid-filled elastic mount further comprises a second flexible layer which cooperates with the movable member to define the auxiliary chamber and which permits a change in volume of the auxiliary chamber, and the second flexible layer partially defines a second operating chamber which is exposed to the reduced pressure to attract the second flexible layer for thereby indirectly exposing the auxiliary chamber to the reduced pressure so as to disable the movable member.

In the fluid-filled elastic mount according to the above first preferred form of the invention, the movable member is protected from direct exposure to the reduced pressure, and therefore has improved durability. Where the reduced pressure is provided by the intake system of an internal combustion engine of the motor vehicle on which the elastic mount is used, an oil contained in air in the intake system would adhere to the movable member and deteriorate the movable member, if the movable member was exposed directly to the reduced pressure. The present form of the invention is effective to avoid this drawback.

According to a second preferred form of this invention, the auxiliary chamber is fluid-tightly separated by the movable member from the pressure-receiving chamber, and is filled with air. In the fluid-filled elastic mount according to this form of the invention, the auxiliary chamber need not be charged or filled with a non-compressible fluid, so that the construction of the elastic mount is simplified and the manufacture is facilitated. Further, the air filling the auxiliary chamber permits easier tuning of the movable member so as to provide a damping effect with respect to vibrations having comparatively high frequencies, than a non-compressible fluid filling the auxiliary chamber.

According to a third preferred form of this invention, the fluid-filled elastic mount 1, further comprises a restricting member for limiting an amount of deformation or displacement of the movable member in a direction from the pressure-receiving chamber toward the auxiliary chamber. In the present elastic mount, the movable member has improved durability owing to the restricting member, which prevents an excessive amount of deformation or displacement of the movable member when the auxiliary chamber is exposed to the reduced pressure. Further the restricting member is effective to prevent or minimize an adverse influence of the movable member on the damping effect provided by the second orifice passage. Namely, the medium-frequency vibrations can be more effectively and stably damped on the basis of resonance of the fluid flowing through the second orifice passage, because the maximum amount of deformation or displacement of the movable member caused upon application of the medium-frequency vibrations is limited by the restricting member.

According to a fourth preferred form of this invention, the biasing means includes a coil spring accommodated in the first operating chamber and biasing said presser member toward the first flexible layer. In this elastic mount, the presser member is biased by the coil spring toward the first flexible layer, so that the first flexible layer is forced onto a portion of the passage defining means which defines an end of the second orifice passage on the side of the equilibrium chamber. The coil spring assures improved stability of the biasing force acting on the pressure member, and therefore improved stability of closure of the second orifice passage at its end on the side of the equilibrium chamber, thereby assuring improved stability of the vibration damping or isolating effect provided by the first orifice passage and the movable member.

According to a fifth preferred form of the present invention, the second mounting member includes a portion which partially defines the pressure-receiving chamber and which has at least one window formed therethrough, the movable member consists of a movable rubber layer which is formed integrally with the elastic body and which fluid-tightly closes each of the above-indicated at least one window. This elastic mount wherein the movable member in the form of the movable rubber layer is an integral part of the elastic body is simpler in construction with a reduced number of components, and is easier to manufacture. In particular, the present elastic mount is desirably adapted to include the feature according to the second preferred form of the invention wherein the auxiliary chamber is fluid-tightly separated by the movable member from the pressure-receiving chamber and is filled with air.

According to a sixth preferred form of the present invention, the second mounting member includes a cylindrical member which has an open end closed by the elastic body and which partially defines the pressure-receiving chamber, and the cylindrical member has at least one window formed therethrough. In this case, the movable member is disposed in each of the above-indicated at least one window. In this elastic mount, a portion of the cylindrical member of the second mounting member is effectively utilized to provide a space for installation of the movable member, so that the elastic mount can be made compact.

According to a seventh preferred form of this invention, the second mounting member consists of a generally cylindrical structure having a closed end, an open end closed by the elastic body, and an interior space divided by the first flexible diaphragm into a first part on the side of the open end and a second part on the side of the closed. In this instance, the fluid-filled elastic mount further comprises a partition member which divides the first par( into the pressure-receiving chamber and the equilibrium chamber, and the presser member is disposed in the second part. The generally cylindrical structure includes a bottom wall at the closed end, and the first operating chamber is formed between the presser member and the bottom wall.

In the fluid-filled elastic mount according to the seventh preferred form of the invention, the pressure-receiving chamber, the equilibrium chamber and the first operating chamber are all provided within the generally cylindrical structure of the second mounting member. Thus, the interior space of the generally cylindrical member is effectively utilized for the chambers, and the elastic mount is made compact. The present elastic mount is desirably adapted to include the feature according to the fourth preferred form of the invention in which the coil spring is disposed in the first operating member, that is, between the presser member and the bottom wall of the second mounting member.

According to an eighth preferred form of this invention, the passage defining means includes a partition member which divides the pressure-receiving chamber and the equilibrium chamber and which has an outer portion defining the first orifice passage and an inner central portion defining the second orifice passage, and the second orifice passage is open to the equilibrium chamber through a central part of the inner central portion of the partition member.

In the elastic mount according to the eighth preferred form of the invention, the first orifice passage can be given a desired length and can therefore be easily tuned to damp the vibrations in the desired low-frequency band, since the first orifice is formed through the relatively outer portion of the partition member. In addition, the presser member can be easily located so as to force the first flexible layer onto the central part of the inner central portion of the partition member so as to close the second orifice passage at its end on the side of the equilibrium chamber.

According to a ninth preferred form of this invention, the fluid-filled elastic mount further comprises a first connector communicating with the first operating chamber, a second connector associated with with the auxiliary chamber, an air conduit connected to the first and second connectors, and single switching means for selectively connecting and disconnecting the air conduit to and from a vacuum source, so that the reduced pressure is concurrently applied to the first operating chamber and the auxiliary chamber through the first and second connectors and the air conduit when the air conduit is connected by the switching means to the vacuum source.

In the elastic mount according to the ninth preferred form of the invention, the first operating chamber and the auxiliary chamber can be concurrently connected to the vacuum source or disconnected therefrom, by a single operation of the single switching means, to change the damping characteristics of the elastic mount. Accordingly, the pneumatic system associated with the chambers can be made simple in construction, and the control to change the damping characteristics is facilitated.

### BRIEF DESCRIPTION OF THE DRAWINGS

The above and optional objects, features, advantages and technical and industrial significance of this invention will be better understood by reading the following detailed description of a presently preferred embodiment of this invention, when considered in connection with the accompanying drawings in which:
Fig. 1 is an elevational view in vertical cross section of a fluid-filled elastic mount in the form of an engine mount constructed according to one embodiment of this invention;
Fig. 2 is an elevational view in vertical cross section showing the engine mount of Fig. 1 as installed on a motor vehicle, when first and second operating chambers are both connected a vacuum source;
Fig. 3 is a view schematically illustrating an operating state of the engine mount of Fig. 1 when the first and second operating chambers are both connected to the vacuum source; and
Fig. 4 is a view schematically illustrating another operating state of the engine mount of Fig. 1 when the operating chambers are both connected to the vacuum source.

### DETAILED DESCRIPTION OF THE PREFERRED EMBODIMENT

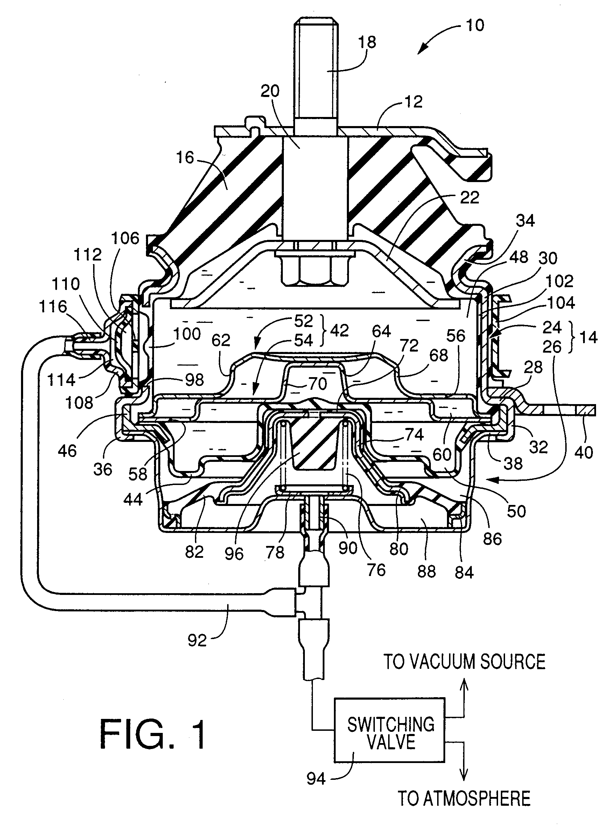

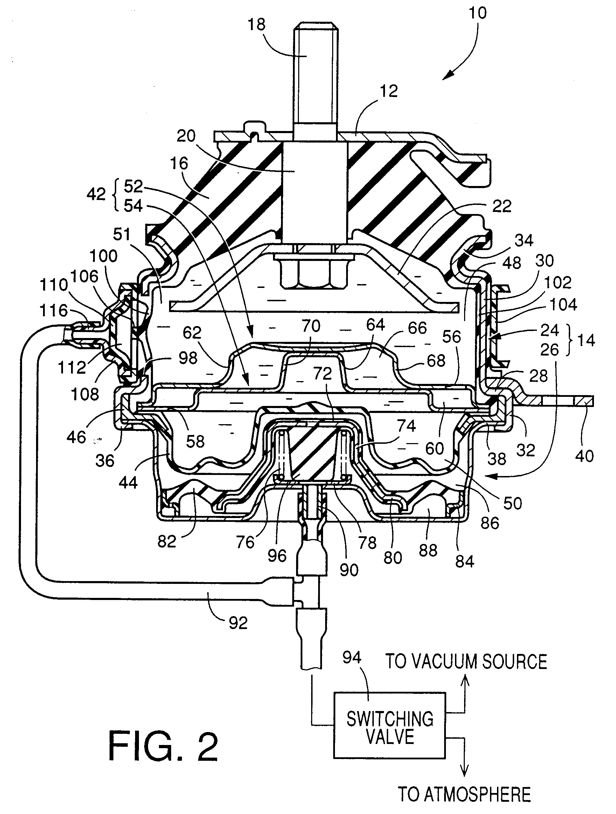

Referring first to Fig. 1, there is shown one embodiment of a fluid-filled elastic mount of this invention in the form of an engine mount 10, wherein a first mounting member 12 and a second mounting member 14 both made of metallic materials are spaced apart from each other by a predetermined distance and are elastically connected to each other by an elastic body 16 formed of a rubber material interposed therebetween. With the first and second mounting members 12, 14 fixed to one and the other of a body and a power unit of an automotive vehicle, respectively, the power unit is installed or supported on the vehicle body in a vibration damping manner. With the power unit installed on the vehicle body through the engine mount 10, the weight of the power unit acts on the the elastic body 16, and the elastic body 16 is elastically deformed with a result of a predetermined amount of vertical relative displacement of the first and second mounting members 12, 14 toward each other, so that the engine mount 10 is placed in a normal position of Fig. 2 in which only the static load acts on the engine mount 10. The present engine mount 10 is adapted to damp a dynamic vibrational load applied thereto in the substantially vertical direction, which is the vertical direction as seen in Figs. 1 and 2.

The first mounting member 12 includes a generally circular plate having a central portion to which there are secured a screw portion 18 and a support rod portion 20. The support rod portion 20 extends in the axially downward direction from the circular plate, and carries at its lower end a frusto-conical member 22 bolted thereto. The frusto-conical member 22 is made of a metallic member and has a generally frusto-conical shape generally extending in the radial direction of the support rod portion 20. The screw 18 is formed as an integral part of the support rod portion 20, so as to extend from the upper end of the support rod portion 20, namely, from the circular plate in the axially upward direction. The first mounting member 12 is attached to the power unit of the automotive vehicle through the screw portion 18.

The second mounting member 14 includes a generally cylindrical member 24 made of a metallic material and open at its opposite ends, and a generally cylindrical bottom member 26 also made of a metallic member and closed at one of its opposite ends. The cylindrical member 26 has a shoulder 28 at an intermediate portion thereof, and includes an axially upper small-diameter portion 30 and an axially lower large-diameter portion 32 which are formed on the opposite sides of the shoulder 28. At the upper open end of the small-diameter portion 30, there is provided a recessed portion 34 extending radially inwardly of the cylindrical portion 24. As shown in Fig. 1, the recessed portion 34 provides an annular groove defined by a curved surface. At the lower open end of the large-diameter portion 32, there is provided a calking portion 36. The bottom member 26 has an outward flange 38 formed at its upper open end so as to extend in the radially outward direction. The bottom member 26 is secured by calking at its outward flange 38 to the calking portion 36 of the cylindrical member 24, such that the cylindrical member 24 and the bottom member are disposed in coaxial relationship with each other. Thus, the second mounting member 14 is a generally cylindrical member which is closed at its lower end and open at its upper end and which has a relatively large depth or axial dimension. A planar bracket 40 is fixed to the shoulder 28 of the cylindrical member 24, at selected circumferential positions of the shoulder 28, so that the second mounting member 14 is attached to the body of the vehicle.

The elastic body 16 is interposed between the first and second mounting members 12, 14 so as to elastically connect the first mounting member 12 to the open end portion of the second mounting member 14 such that the two members 12, 14 are disposed substantially coaxially with each other and axially spaced apart from each other by the predetermined distance. The elastic body 16 has a generally frusto-conical shape formed by vulcanization of a rubber material. In the vulcanization process, the first mounting member 12 is bonded to a small-diameter end face of the elastic body 16, while the recessed portion 34 of the second mounting member 14 is bonded to an outer circumferential surface at a large-diameter end portion of the elastic body 16. Thus, the elastic body 16 cooperates with the first and second mounting members 12, 14 to constitute an integral structure in which the opening of the second mounting member 14 is fluid-tightly closed by the elastic body 16.

The support rod portion 20 of the first mounting member 12 extends downwardly from a central portion of a frusto-conical bottom surface of the elastic body 16, into the interior of the integral structure. The frusto-conical member 22 bolted to the lower end of the support rod portion 20 is located within the upper end portion of the cylindrical member 24 of the second mounting member 14.

To the large-diameter portion 32 of the cylindrical member 24 of the second mounting member 14, there are a partition member 42 and a first flexible layer in the form of a diaphragm 44 consisting of a rubber layer having a relatively small thickness. The partition member 42 and the diaphragm 44 are superposed on each other at their peripheral portions and are squeezed by and between the shoulder 28 and the calking portion 36 of the cylindrical member 24 in the axial or vertical direction of the engine mount 10. A metal ring 46 is bonded to the peripheral portion of the diaphragm 44, so that the squeezing force acting on the peripheral portions of the partition member 42 and the diaphragm 44 is effectively maintained by the metal ring 46.

The diaphragm 44 fluid-tightly divides the interior space of the integral structure 12, 14, 16 into an upper part and a lower part. The upper part is partially defined by the elastic body 16 and is filled with a non-compressible fluid, while the lower part is partially defined by the bottom member 26 of the second mounting member 14 and is not filled with the fluid. The non-compressible fluid preferably has a viscosity of not higher than 0.1Pa·s, so as to provide an intended vibration damping effect on the basis of resonance of the fluid. For instance, the non-compressible fluid is selected from among water, alkylene glycol, polyalkylene glycol and silicone oil.

The partition member 42 located between the elastic body 16 and the diaphragm 44 fluid-tightly divides the upper part of the interior space of the integral structure 12, 14, 16 into a pressure-receiving chamber 48 and an equilibrium chamber 50. The pressure-receiving chamber 48, which is formed on one side of the partition member 42, is partially defined by the elastic body 16. Upon application of a vibrational load to the engine mount 10 in the vertical direction, the elastic body 16 is elastically deformed, causing a change in the pressure of the fluid in the pressure-receiving chamber 48. The equilibrium chamber 50, which is formed on the other side of the partition member 42, is partially defined by the diaphragm 44. The volume of the equilibrium chamber 50 is variable by elastic deformation of the diaphragm 44.

With the engine mount 10 installed on the vehicle body, the elastic body 16 is elastically deformed by the weight of the vehicle power unit acting thereon, so that the frusto-conical member 22 disposed in the pressure-receiving chamber 48 is normally located at a predetermined axial position in which the peripheral portion of the frusto-conical member 22 is spaced apart from the lower end of the elastic body 16, as shown in Fig. 2. In this condition, an annular restricted fluid passage 51 is formed between the periphery of the frusto-conical member 22 and the corresponding portion of the inner circumferential surface of the small-diameter portion 30 of the cylindrical member 24 of the second mounting member 14. The fluid in the pressure-receiving chamber 48 is forced to flow through this annular restricted fluid passage 51, when the pressure of the fluid in the pressure-receiving chamber 48 is periodically changed upon application of a vibrational load to the engine mount 10. The peripheral portion of the frusto-conical member 22 is opposed to the recessed portion 34 of the cylindrical member 24 with a predetermined axial distance being normally provided therebetween, so that the peripheral portion may abut on the recessed portion 34 upon application of an excessive vibrational load. Thus, the frusto-conical member 22 and the recessed portion 34 cooperate to provide a rebound stop for preventing an excessive amount of deformation of the elastic body 16 in the rebounding direction, i.e., in the upward direction.

The partition member 42 consists of an upper metal member 52 and a lower metal member 54, which are formed by pressing from substantially circular plates. These upper and lower metal members 52, 54 are superposed on each other at selected radial portions thereof, and and have surfaces cooperating to define a relatively outer first orifice passage 60 and a relatively inner second orifice passage 66. The first and second orifice passages 60, 66 extend in the circumferential direction of the partition member 42 over predetermined lengths. The first orifice passage 60 communicates at its opposite ends with the pressure-receiving and equilibrium chambers 48, 50 through respective communication holes 56, 58. The second orifice passage 66, which is located radially inwardly of the first orifice passage 60, communicates at its opposite ends with the pressure-receiving and equilibrium chambers 48, 50 through respective communication holes 62, 64. The first and second orifice passages 60, 66 are formed in parallel with each other between the pressure-receiving and equilibrium chambers 48, 50, for fluid communication between these two chambers 48, 50. Upon application of a vibrational load to the engine mount 10, the pressures in the two chambers 48, 50 are changed relative to each other, and the non-compressible fluid is forced to flow through the first and second orifice passages 60, 66.

It will be understood that the partition member 42 consisting of the upper and lower metal members 52, 54 functions as passage defining means for defining the first and second orifice passages 60, 66.

The first and second orifice passages 60, 66 are tuned such that a ratio A/L of a cross sectional area A of fluid flow through the second orifice passage 66 to a length L thereof is larger than that of the first orifice passage 60. Described more specifically, the ratio A/L of the first orifice passage 60 is determined so as to provide an intended damping effect with respect to low-frequency vibrations such as shakes, on the basis of the resonance of the fluid flowing through the first orifice passage 60. On the other hand, the ratio A/L of the second orifice passage 66 is determined so as to exhibit a low dynamic spring constant for effectively damping medium-frequency vibrations such as an engine idling vibration, on the basis of the resonance of the fluid flowing through the second orifice passage 66.

The upper metal member 52 includes a central large-diameter inverted-cup portion 68, while the lower metal member 54 includes a central small-diameter inverted-cup portion 70 which has a smaller diameter than the large-diameter inverted-cup portion 68 and which is located within the inverted-cup portion 68. The opposed inner surfaces of these outer and inner inverted-cup portions 68 and 70 cooperate to define the second orifice passage 66, which has an outside diameter corresponding to the diameter of the large-diameter inverted-cup portion 68 and an inside diameter corresponding to the diameter of the small-diameter inverted-cup portion 70. The communication hole 64 for fluid communication between the second orifice passage 66 and the equilibrium chamber 50 is formed through a cylindrical wall of the small-diameter inverted-cup portion 70 of the lower metal member 54. The communication hole 64 communicates with the equilibrium chamber 50 through the lower end of the inverted-cup portion 70 which is open downward.

In the lower part of the interior space of the integral structure 12, 14, 16, which part is defined by the diaphragm 44 and the bottom member 26 of the second mounting member 14, there is disposed a presser member 74 made of a metallic material and having a substantially inverted-cup shape. The presser member 74 has an upper end wall having a circular outer or upper face serving as a presser surface 72. The presser member 74 is disposed so as to be displaceable in the vertical direction. Within the presser member 74, there is accommodated biasing means in the form of a coil spring 76 such that the coil spring 76 is subjected to a suitable amount of compression by and between the upper end wall of the presser member 74 and the bottom wall of the bottom member 26. The coil spring 76 is positioned by a spring seat 78 fixed to the inner surface of the bottom wall of the bottom member 26. The biasing force of the coil spring 76 acts on the presser member 74 in the upward direction, so that the presser member 74 is normally held in an upper position in which the presser surface 72 is in abutting contact with a central portion of the diaphragm 44, while the lower open end of the presser member 74 is spaced apart from the bottom wall of the bottom member 26. In the upper position of the presser member 74, the central portion of the diaphragm 44 is pressed onto the corresponding central portion of the lower metal member 54.

The presser member 74 has a tapered cylindrical portion whose diameter increases in the downward direction toward the lower open end. The presser member 74 has an integrally formed annular pressure-receiving portion 80 at its lower open end portion. To the annular pressure-receiving portion 80, there is bonded a substantially annular support rubber member 82 such that the support rubber member 82 extends radially outwardly of the pressure-receiving portion 80. The support rubber member 82 is bonded at its outer periphery to a metal ring 84 . The outer surface of the presser member 74 is covered by a rubber layer which is formed integrally with the support rubber member 82. With the metal ring 84 press-fitted in the lower end portion of the bottom member 26, the support rubber member 82 is fluid-tightly fixed at its outer periphery to the inner surface of the bottom member 26. In this arrangement, the interior space defined by the diaphragm 44 and the bottom member 26 is fluid-tightly divided by the presser member 74 and the support rubber member 82, into two sections on the open and closed sides of the bottom member 26. That is, the two sections consist of a static chamber 86 located on one side of the presser member 74 and partially defined by the diaphragm 44, and a fluid-tightly enclosed first operating chamber 88 located on the other side of the presser member 74 and partially defined by the bottom wall of the bottom member 26. The static chamber 86 permits elastic deformation or displacement of the diaphragm 44.

A first connector 90 is provided so as to extend through a central part of the bottom wall of the bottom member 26. The first connector 90 communicates at one end thereof with the first operating member 88, and is connected at the other end to an air conduit 92 which is connected to switching means in the form of a switching valve 94. The first operating chamber 88 is selectively exposed to an atmospheric pressure and a reduced pressure of a vacuum source, depending upon whether the switching valve 94 is placed in an atmospheric pressure position or a reduced pressure position. When the switching valve 94 is placed in the atmospheric pressure position in which the first operating chamber 88 is exposed to the atmospheric pressure, the diaphragm 44 is pressed onto the partition member 42 with the biasing force of the coil spring 76 acting on the presser member 74, as shown in Fig. 1, so that the opening of the small-diameter inverted-cup portion 70 having the communication hole 64 is fluid-tightly closed by the diaphragm 44, whereby the second orifice passage 66 is disconnected from the equilibrium chamber 50.

It will be understood that the diaphragm 44, presser member 74 and coil spring 76 constitute a major part of closing means for closing the second orifice passage 66 at its end on the side of the equilibrium chamber 50.

When the switching valve 94 is switched to the reduced pressure position in which the first operating chamber 88 is exposed to the reduced pressure of the vacuum source, the presser member 74 elastically supported by the support rubber member 82 is axially displaced downward toward the bottom wall of the bottom member 26 against the biasing force of the coil spring 76, as shown in Fig. 2, in the presence of a difference between the pressures in the static chamber 86 and the first operating chamber 88, so that the diaphragm 44 is permitted to be displaced away from the partition wall 42, whereby the second orifice passage 66 is brought into fluid communication with the equilibrium chamber 50 through the communication hole 64.

The annular pressure-receiving portion 80 of the presser member 74, which partially defines the first operating chamber 88 and has comparatively high rigidity, functions to assure a sufficiently large pressure-receiving surface area within the first operating chamber 88, so that the presser member 74 may be stably operated by application thereto and removal therefrom of a relatively small vacuum force based on the reduced pressure, for improving the stability of connecting and disconnecting the second orifice passage 66 to and from the equilibrium chamber 50.

The presser member 74 has a buffer rubber protrusion 96 bonded to a central portion of the inner surface of the upper end wall. The buffer rubber protrusion 96 extends through a space within the coil spring 76, in the axially downward direction toward the bottom wall of the bottom member 26 of the second mounting member 14. The buffer rubber protrusion 96 is adapted to abut on the bottom member 26 when the presser member 74 is displaced downward when the first operating chamber 88 is exposed to the reduced pressure. Thus, the buffer rubber protrusion 96 functions to limit the amount of axially downward displacement of the presser member 74. The elasticity of the buffer rubber protrusion 97 reduces or prevent a noise of abutting contact thereof with the bottom member 26.

The small-diameter portion 30 of the cylindrical member 24 of the second mounting member 14, which partially defines the pressure-receiving chamber 48, has at least one circular window 98 formed therethrough, and a movable member in the form of a movable rubber layer 100 which has a circular shape and covers each circular window 98. The movable rubber layer 100 is bonded at its periphery to the edge of the corresponding circular window 98, to thereby fluid-tightly close the window 98. The inner circumferential surfaces of the small-diameter portion 30 and the recessed portion 34 are substantially entirely covered by a sealing rubber layer 102 having a relatively small thickness. The movable rubber layer 100 is formed integrally with this sealing rubber layer 102. It is noted that these movable rubber layer 100 and the sealing rubber layer 102 are both formed as an integral part of the elastic body 16.

A restricting sleeve 104 is closely fitted on the outer circumferential surface of the cylindrical portion 24. This restricting sleeve 104 has an axial length sufficient to fully cover the diameter of the circular window 98, and is spaced radially outwardly from the movable rubber layer 100. The restricting sleeve 104 has an aperture 106 formed through a portion thereof which is located within the circular window 98 and opposed to the movable rubber layer 100. The restricting sleeve 104 and the movable rubber layer 100 cooperate to define a space, which is open through the aperture 106 to the outer circumferential surface of the restricting sleeve 104.

A generally cup-shaped cap member 108 is fluid-tightly fixed at its periphery to the outer circumferential surface of the restricting sleeve 104, so as to close the aperture 106. The cap member 108 may be fixed to the restricting sleeve 104 by suitable means, for example, by ultrasonic welding, where the cap member 108 and sleeve 104 are both formed of a thermo-setting resin.

A second flexible layer in the form of a diaphragm 110 made of a rubber material is disposed between the cap member 108 and the restricting sleeve 104 such that the peripheral portion of the diaphragm 110 is held between the cap member 108 and the restricting sleeve 104. The space between the movable rubber layer 100 and the restricting sleeve 104 and the space between the restricting sleeve 104 and the diaphragm 110 communicate with each other through the aperture 106, and cooperate to define a fluid-tightly enclosed auxiliary chamber 112, which is filled with air and which permits elastic deformation or displacement of the movable rubber layer 100. The auxiliary chamber 112 is fluid-tightly separated by the movable member 100 from the pressure-receiving chamber 48. The diaphragm 110 and the cap member 108 cooperate to define a second operating chamber 114. The air conduit 92 indicated above is also connected to the second operating member 114 through a second connector 116 connected to a central portion of the bottom wall of the cap member 108. The second operating chamber 114 is selectively exposed to the atmosphere and the reduced pressure of the vacuum source, through the switching valve 94, depending upon the selected operating position of the switching valve 94. When the switching valve 94 is placed in the atmospheric position in which the second operating chamber 114 is exposed to the atmosphere, the diaphragm 110 is permitted to be elastically deformed or displaced, as shown in Fig. 1, permitting a change in the volume of the auxiliary chamber 112, so that the movable rubber layer 100 is permitted to undergo elastic deformation or displacement, whereby a pressure change generated in the pressure-receiving chamber 48 can be absorbed, with a result of a reduction in the dynamic spring constant of the engine mount 10.

The spring constant of the movable rubber layer 100, the diameter of the circular window 98 and the amount of deformation of the movable rubber layer 100 which is limited by abutting contact with the restricting sleeve 104 are suitably determined for absorbing the pressure change in the pressure-receiving chamber 48 on the basis of the elastic deformation of the movable rubber layer 100, so as to exhibit a reduced dynamic spring constant for effectively isolating booming noises and other high-frequency vibrations having a relatively small amplitude. The restricting sleeve 104 functions as a restricting member for limiting the amount of deformation or displacement of the movable member 100 in the direction from the pressure-receiving chamber 48 toward the auxiliary chamber 112 when the auxiliary chamber 112 is exposed to the reduced pressure.

When the switching valve 94 is placed in the reduced pressure position in which the second operating chamber 114 is exposed to the reduced pressure through the second connector 116, the diaphragm 110 is attracted onto the inner surface of the cap member 108, as shown in Fig. 2, due to a difference between the pressures in the second operating chamber 114 and the auxiliary chamber 112. Consequently, the auxiliary chamber 112 is indirectly exposed to the reduced pressure, so that the movable rubber layer 100 is attracted onto the inner circumferential surface of the restricting sleeve 104. In this condition, the elastic deformation or displacement of the movable rubber layer 100 is prevented, whereby the movable rubber layer 100 is disabled to normally function, that is, inhibited to absorb the pressure change in the pressure-receiving chamber 48. It will be understood that the second connector 116 is associated with the auxiliary chamber 112.

The second operating chamber 114 as well as the first operating chamber 88 is connected through the air conduit 92 to the switching valve 94. Accordingly, the first and second operating chambers 88, 114 are concurrently exposed to the reduced pressure when the switching valve 94 is placed in the reduced pressure position, or alternatively to the atmospheric pressure when the valve 94 is placed in the atmospheric pressure position.

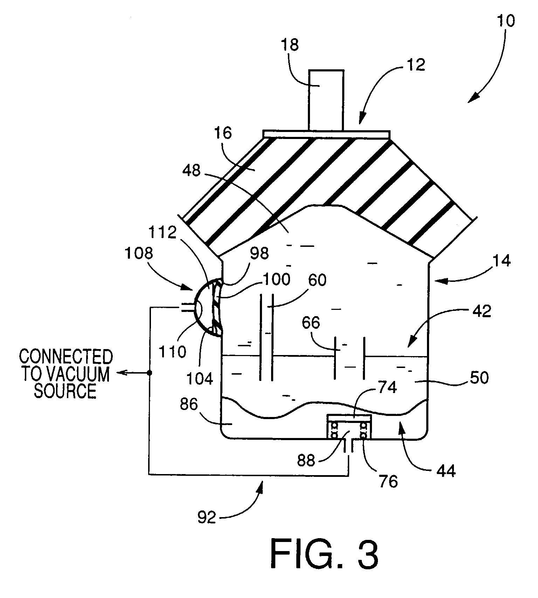

When the first and second operating chambers 88, 114 are both concurrently exposed to the reduced pressure of the vacuum source, the second orifice passage 66 is normally communicated with the equilibrium chamber, while the movable rubber layer 100 is disabled to normally function, being attracted onto the restricting sleeve 104, as schematically indicated in Fig. 3. In this condition, the engine mount 10 exhibits an excellent damping effect with respect to the engine idling vibration, on the basis of the resonance of the fluid flowing through the second orifice passage 66, while effectively preventing the movable rubber layer 100 from functioning to effect the absorption of the pressure change in the pressure-receiving chamber 48, which absorption would deteriorate the damping effect with respect to the engine idling vibration. Although the first orifice passage 60 is also communicated with the pressure-receiving and equilibrium chambers 48, 50 in this condition, only a negligibly small amount of the fluid flows through the first orifice passage 60 due to a relatively high resistance to flow of the fluid through the first orifice passage 60 when the medium-frequency vibration such as the engine idling vibration is applied to the engine mount 10. Accordingly, the first orifice passage 60 does not significantly deteriorate the damping effect with respect to the medium-frequency vibration. Thus, the present engine mount 10 is capable of exhibiting an excellent damping effect with respect to the engine idling and other medium-frequency vibrations when the switching valve 94 is placed in the reduced pressure position.

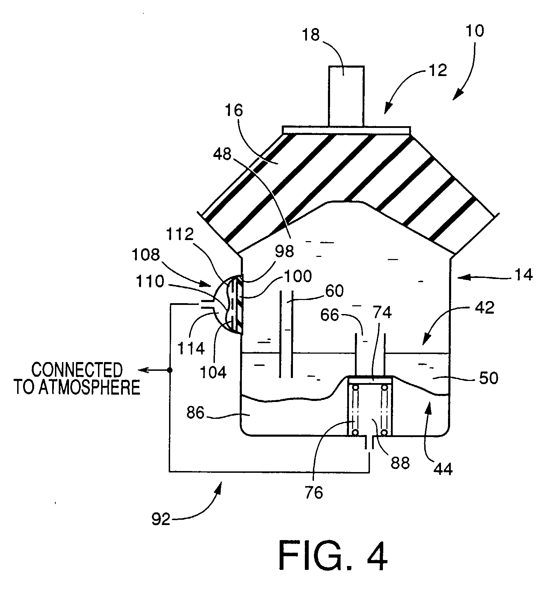

When the switching valve 94 is placed in the atmospheric pressure position, on the other hand, the first and second operating chambers 88 and 114 are both concurrently exposed to the atmosphere, and the movable rubber layer 100 is permitted to undergo elastic deformation or displacement, namely, enabled to normally function to abort the pressure change in the pressure-receiving chamber 48, while the second orifice passage 66 is disconnected from the equilibrium chamber 50 or disabled to normally function, as schematically indicated in Fig. 4. In this condition, the engine mount 10 exhibits an excellent damping effect with respect to the shakes and other low-frequency vibrations, on the basis of the resonance of the fluid flowing through the first orifice passage 60, while effectively preventing the second orifice passage 66 from deteriorating the damping effect provided by the first orifice passage 60. The engine mount 10 in this condition is also capable of exhibiting an excellent isolating effect with respect to the booming noise and other high-frequency vibrations on the basis of the elastic deformation or displacement of the movable rubber layer 100 to absorb the pressure change in the pressure-receiving chamber 48. It is noted that the absorption of the pressure change by the movable rubber layer 100 upon application of the shakes and other low-frequency vibrations to the engine mount 10 does not significantly reduce the damping effect provided by the first orifice passage 60, since the amplitude of the low-frequency vibrations is considerably smaller than that of the booming noise and other high-frequency vibrations.

The switching valve 94 may be manually or automatically controlled depending upon the type or frequency of the vibrations applied to the vehicle. Described more specifically, the switching valve 94 is operated to the reduced pressure position when it is desired to effectively damp the medium-frequency vibrations on the basis of the resonance of the fluid flowing through the second orifice passage 66, and is operated to the atmospheric pressure position when it is desired to effectively damp the low-frequency vibrations on the basis of the resonance of the fluid flowing through the first orifice passage 60, and the high-frequency vibrations on the basis of the absorption by the movable rubber layer 100 of the pressure change in the pressure-receiving chamber 48.

In the engine mount 10 constructed as described above according to the presently preferred embodiment of this invention, the switching valve 94 is placed in the reduced pressure position while the vehicle is stopped with the engine operating at the idling speed, so that the first and second operating chambers 88, 114 are concurrently exposed to the reduced pressure, to enable the second orifice passage 66 to normally operate and to disable the movable rubber layer 100 to normally operate, for effectively damping the engine idling vibration. While the vehicle is running, the switching valve 94 is operated to the atmospheric pressure position so that the first and second operating chambers 88, 114 are both concurrently exposed to the atmospheric pressure, to enable the movable rubber layer 100 to normally operate and disable the second orifice passage 66 to normally operate, for effectively damp the shakes and other low-frequency vibrations and the booming noise and other high-frequency vibrations, which are generated during running of the vehicle.

Since the present engine mount 10 employs the single switching valve 94 for changing its damping characteristics, the pneumatic system for selectively applying the atmospheric and reduced pressures to the operating chambers 88, 114 is simplified, and the control of the pneumatic system including the switching valve 94 is significantly facilitated.

Since the switching mechanism to change the damping characteristics utilizes the reduced pressure, the switching mechanism is simpler in construction than a switching mechanism using a rotary valve. The simpler construction not only makes it possible to manufacture the switching mechanism at an accordingly reduced cost, but also permits reduction in the required manufacturing and assembling accuracy of the components, while assuring satisfactory operating reliability of the engine mount 10.

The present embodiment is particularly advantageous in that the first and second operating chambers 88, 114 are exposed to the reduced pressure to effectively and stably damp the engine idling vibration, since the reduced pressure is usually available, without an exclusive vacuum tank, while the vehicle is stationary with the engine in the idling condition.

While the presently preferred embodiment of this invention has been described above in detail by reference to the accompanying drawings, it is to be understood that the invention is not limited to the details of the illustrated embodiment, but may be otherwise embodied.

For instance, the auxiliary chamber 112 filled with air in the illustrated embodiment may be filled with water or other non-compressible fluid.

Further, the movable rubber layer 100 provided as the movable member for absorbing a pressure change in the pressure-receiving chamber 48 may be replaced by a hard or rigid movable plate which is adapted to be movable or displaceable over a suitable distance, so as to absorb the pressure change in the pressure-receiving chamber 48.

In the illustrated embodiment, the auxiliary chamber 122 provided to permit deformation or displacement of the movable rubber layer 100 is partially defined by the diaphragm 110, which in turn partially define the second operating chamber 114 which is exposed to the reduced pressure so as to indirectly expose the auxiliary chamber 112 to the reduced pressure. However, the diaphragm 100 may be eliminated, so that the movable rubber layer 100 and the cap member 108 define an auxiliary chamber which is selectively and directly exposed to the atmospheric or reduced pressure. In this case, too, the movable rubber layer 100 is attracted onto the restricting sleeve 104 when the auxiliary chamber is exposed to the reduced pressure, to disable the movable rubber layer 100 as the movable member.

Further, the construction of the first and second orifice passages 60, 66 may be modified as needed, depending upon the desired damping characteristics to be exhibited.

The coil spring 76 may be replaced by other suitable biasing means such as a rubber or other elastic member, for biasing the presser member 74 to force the first flexible layer or diaphragm 44 onto the partition member 42 to disconnect the second orifice passage 66 from the equilibrium chamber 50, for disabling the second orifice passage 66.

It will be understood that the principle of the present invention is equally applicable to any elastically mounting devices other than an engine mount for automotive vehicles.

It is to be understood that the present invention may be embodied with various other changes, modifications and improvements, which may occur to those skilled in the art, without departing from the spirit and scope of the invention defined in the following claims.
A fluid-filled elastic mount having elastic body (16) partially defining a pressure-receiving chamber (48), a flexible layer (44) partially defining an equilibrium chamber (50) communicating with the pressure-receiving chamber through first and second orifices (60, 66), a presser member (74) normally biased to force the flexible layer to close the second orifice at its one end on the side of the equilibrium chamber and partially defining an operating chamber (88) which is exposed to a reduced pressure to permit the flexible layer to be moved for enabling the second orifice to normally function, and a movable member (100) partially defining an auxiliary chamber (112) which is exposed to the reduced pressure to disable the movable member to normally function.

## Claims

1. A fluid-filled elastic mount comprising (a) a first and a second mounting member (12, 14), (b) an elastic body (16) elastically connecting said first and second mounting members, and partially defining a pressure-receiving chamber (48) filled with a non-compressible fluid, (c) a first flexible layer (44) whose volume is variable and which partially defines an equilibrium chamber (50) filled with said fluid, (d) passage defining means (42) for defining a first and a second orifice passage (60, 66) for fluid communication between said pressure-receiving and equilibrium chambers, said second orifice passage (66) being tuned to provide a damping effect with respect to a vibrational load whose frequency band is higher than that of said second orifice passage (60), (e) closing means for closing said second orifice passage, and (f) a movable member (100) which partially defines said pressure-receiving chamber and which is deformable or displaceable so as to absorb a change in a pressure in said pressure-receiving chamber, **characterised in that:**
said closing means (44, 74, 76) includes said first flexible layer (44), a presser member (74) disposed on one of opposite sides of said first flexible layer remote from said equilibrium chamber (50), and biasing means (76) for biasing said presser member to force said first flexible layer onto said passage defining means, for thereby closing said second orifice passage (66) at one end thereof on the side of said equilibrium chamber;
said presser member partially defines a first operating chamber (88) on one of opposite sides thereof remote from said first flexible layer, said first operating chamber being exposed to a reduced pressure to move said presser member against a biasing force of said biasing means, for permitting said first flexible layer to be spaced apart from said passage defining means, for enabling said second orifice passage to normally function;
said movable member (100) partially defines a fluid-tightly enclosed auxiliary chamber (112) on one of opposite sides thereof remote from said pressure-receiving chamber, said auxiliary chamber permitting said movable member to be deformed or displaced, said auxiliary chamber being exposed to the reduced pressure to disable said movable member to normally function.

2. A fluid-filled elastic mount according to claim 1, further comprising a second flexible layer (110) which cooperates with said movable member (100) to define said auxiliary chamber (112) and which permits a change in volume of said auxiliary chamber, and wherein said second flexible layer partially defines a second operating chamber (114) which is exposed to a reduced pressure to attract said second flexible layer for thereby indirectly exposing said auxiliary chamber to said reduced pressure so as to disable said movable member.

3. A fluid-filled elastic mount according to claim 1 or 2, wherein said auxiliary chamber (112) is fluid-tightly separated by said movable member (100) from said pressure-receiving chamber (48), and is filled with air.

4. A fluid-filled elastic mount according to any one of claims 1-3, further comprising a restricting member (104) for limiting an amount of deformation or displacement of said movable member (100) in a direction from said pressure-receiving chamber toward said auxiliary chamber.

5. A fluid-filled elastic mount according to any one of claims 1-4, wherein said biasing means includes a coil spring (76) accommodated in said first operating chamber (88) and biasing said presser member (74) toward said first flexible layer (44).

6. A fluid-filled elastic mount according to any one of claims 1-5, wherein said second mounting member (14) includes a portion (24) which partially defines said pressure-receiving chamber (48) and which has at least one window (98) formed therethrough, said movable member consists of a movable rubber layer (100) which is formed integrally with said elastic body (16) and which fluid-tightly closes each of said at least one window.

7. A fluid-filled elastic mount according to any one of claims 1-6, wherein said second mounting member (14) includes a cylindrical member (24) which has an open end closed by said elastic body (14) and which partially defines said pressure-receiving chamber (48), said cylindrical member having at least one window (98) formed therethrough, said movable member (100) being disposed in each of said at least one window.

8. A fluid-filled elastic mount according to any one of claims 1-7, wherein said second mounting member (14) consists of a generally cylindrical structure having a closed end, an open end closed by said elastic body (16), and an interior space divided by said first flexible diaphragm (44) into a first part on the side of said open end and a second part on the side of said closed, said fluid-filled elastic mount further comprising a partition member (42) which divides said first part into said pressure-receiving chamber (48) and said equilibrium chamber (50), said presser member (74) being disposed in said second part, said generally cylindrical structure including a bottom wall at said closed end, said first operating chamber (88) being formed between said presser member and said bottom wall.

9. A fluid-filled elastic mount according to any one of claims 1-8, wherein said passage defining means includes a partition member (42) which divides said pressure-receiving chamber (48) and said equilibrium chamber (50) and which has an outer portion defining said first orifice passage (60) and an inner central portion defining said second orifice passage (66), said second orifice passage being open to said equilibrium chamber through a central part of said inner central portion of said partition member.

10. A fluid-filled elastic mount according to any one of claims 1-9, further comprising a first connector (90) communicating with said first operating chamber (88), a second connector (116) associated with with said auxiliary chamber (112), an air conduit (92) connected to said first and second connectors, and single switching means (94) for selectively connecting and disconnecting said air conduit to and from a vacuum source, said reduced pressure being concurrently applied to said first operating chamber and said auxiliary chamber through said first and second connectors and said air conduit when said air conduit is connected by said switching means to said vacuum source.
